# EUROPÄISCHE PATENTSCHRIFT

(11) **EP 0 748 020 B1**
(45) Veröffentlichungstag und Bekanntmachung des Hinweises auf die Patenterteilung: **22.03.2000**
(21) Anmeldenummer: 96105612.4
(22) Anmeldetag: 10.04.1996
(51) Int. Cl.: H02G 3/36

(54) **Deckenhalter für Kabelrinnen oder Kabelpritschen**
Ceiling support for cable ducts or cable trays
Support de plafond pour chemins de câbles ou cuvettes à câbles

(30) Priorität: 08.06.1995 DE 19520909
(43) Veröffentlichungstag der Anmeldung: 11.12.1996
(73) Patentinhaber: Rieth & Co. GmbH, D-73230 Kirchheim (DE)
(72) Erfinder: Fink, Ewald, D-73095 Albershausen (DE)
(74) Vertreter: Patentanwälte Rüger, Barthelt & Abel

(56) Entgegenhaltungen:
- DE-U- 9 204 000
- DE-U- 9 215 660
- "Catalogue Gouda Holland bv" 1.Februar 1989 XP002013264 * Seite 29, Absatz 3 *

## Beschreibung

Aus Sicherheitsgründen müssen außerhalb der Wand verlegte Kabel entweder in kurzen Abständen mit Hilfe von Kabelschellen an der Gebäudestruktur befestigt werden oder sie werden in sogenannten Kabelrinnen oder Kabelpritschen verlegt, wenn die Einzelbefestigung der Kabel an der Gebäudestruktur zu aufwendig ist. In diesen Kabelrinnen oder Kabelpritschen dürfen die Kabel lose eingelegt werden.

Bei sehr großen Mengen von Kabeln werden mehrere Kabelrinnen auf Ausleger aufgelegt, die an von der Decke herabhängenden Stielen befestigt sind. Diese Montageart ist verhältnismäßig aufwendig, wenn für die Kabeltrasse lediglich eine einzelne Kabelrinne oder Kabelpritsche erforderlich ist.

Aus dem Prospekt der Firma Utec Katalog Gouda Holland b.v. Seite 38 ist ein Deckenhalter bekannt, um Rinnen einzeln an der Decke aufzuhängen. Bei einer Ausführungsart dieser bekannten Deckenhalter ist ein Blechformteil mit seitlich nach oben gebogenen Leisten vorgesehen, die von unten in den jeweiligen Umbug der Kabelrinne eingreift. In der Mitte enthält das Blechformteil eine Durchgangsöffnung, an der als Stiel eine Gewindestange mit Hilfe von Muttern zu befestigen ist.

Diese Ausführungsform des Deckenhalters erzwingt es, ein zu verlegendes Kabel durch die Öffnung hindurchzufädeln, die von der Kabelrinne und dem Deckenhalter umgrenzt ist.

Bei einer anderen Ausführungsform von Deckenhaltern aus diesem Prospekt weist ein Blechformteil einen mittleren Abschnitt auf, der etwa in der Mitte mit einer nach oben weisenden Ausstülpung versehen ist, an der wiederum eine Gewindestange als Stiel befestigt werden kann. Dieses mittlere Zwischenstück des Blechformteils liegt auf dem Boden der Kabelrinne auf und geht an seinen beiden freien Enden in nach oben weisende Schenkel über. Die Schenkel hören etwa auf der halben Höhe der Kabelrinne auf und enthalten dort Bohrungen für Befestigungsschrauben, die durch entsprechende fluchtende Bohrungen in den Seitenwänden der Kabelrinne eingesteckt werden und auf der Innenseite der Kabelrinne mit Muttern versehen werden müssen.

Ausgehend hiervon ist es Aufgabe der Erfindung, einen Deckenhalter für Kabelrinnen oder Kabelpritschen zu schaffen, der eine einfache Montage ermöglicht und in der Lage ist, die bei der Kabelverlegung auftretenden Kräfte aufzunehmen.

Diese Aufgabe wird erfindungsgemäß mit dem Deckenhalter mit den Merkmalen des Anspruches 1 gelöst.

Der neue Deckenhalter macht von dem Umstand Gebrauch, dass die Seitenwände von Kabelrinnen oder Kabelpritschen aus Stabilitäts- und Sicherheitsgründen mit einem Umbug versehen sind, der an der Innenseite der Seitenwand vorgesehen ist und sich in Richtung auf den Boden der Kabelrinne oder Kabelpritsche öffnet. Der neue Deckenhalter greift mit seinen Trägerelementen von unten her in die von dem Umbug gebildete Rinne ein, wodurch die Kabelrinne oder Kabelpritsche mit dem die Rinne bildenden Bördelrand auf den freien Enden der Trägerelemente aufliegt. Die Länge der Trägerelemente ist dabei an den Abstand des Umbugs von dem Boden angepasst, so dass die Abstandselemente, die die Trägerelemente mit dem Stiel verbinden, auf dem Boden der Kabelrinne oder Kabelpritsche aufliegen, wenn die Trägerelemente mit ihren freien Enden am Grund der durch den Umbug gebildeten Rinne anstoßen.

Die Länge der Abstandselemente hingegen ist so bemessen, dass die Trägerelemente unmittelbar neben der Seitenwand der Kabelrinne oder Kabelpritsche verlaufen.

Mittig zwischen den beiden Seitenwänden ragt der Stiel des Deckenhalters auf, an dem die Befestigungsöse für den Deckenhalter vorgesehen ist. Diese Befestigungsöse wird entweder über eine Stockschraube geschoben und von unten mit Hilfe einer Mutter gesichert oder es wird durch die Befestigungsöse eine entsprechende Befestigungsschraube hindurchgedreht, die in der Decke, unter der die Kabeltrasse verläuft, eingedreht wird.

Besonders einfach wird die Herstellung des neuen Deckenhalters, wenn er insgesamt mit allen seinen an ihm ausgeprägten gegenständlichen Elementen einstückig ist.

Wenn der neue Deckenhalter zusätzlich die verlegte Kabelrinne oder Kabelpritsche gegen Bewegung in Längsrichtung sichern soll, sind vorzugsweise wenigstens erste Kippsicherungsmittel vorgesehen, die ein Verschwenken des in die Kabelrinne oder -pritsche eingesetzten Deckenhalters zumindest in einer Drehrichtung bezüglich einer Achse verhindern, die durch die Abstandselemente festgelegt ist. Diese Kippsicherungsmittel werden vorzugsweise von-einem Ausleger gebildet, der an dem deckenseitigen Ende des Stiels vorgesehen ist und der zweckmäßigerweise die Öse für die Befestigungsschraube enthält. Dadurch können an dem Stiel angreifende Biegemomente, die in einer Richtung wirken, derart, dass der Ausleger gegen die Decke gepresst wird, in die Befestigungsschraube eingeleitet werden, ohne dass die Gefahr besteht, dass die Befestigungsöse beschädigt oder die Schraube zu sehr auf Knick beansprucht wird. Wenn die Kabelrinne oder -pritsche mit mehreren derartigen Deckenhaltern verankert wird, können die Deckenhalter mit abwechselnd in entgegengesetzte Richtung zeigenden Auslegern angebracht werden. Dadurch wird erreicht, dass, gleichgültig von der Richtung, in der die in Längsrichtung der Kabelrinnen oder -pritschen wirkende Kraft angreift, übermäßige Knickbelastungen der Befestigungsschrauben ausgeschlossen werden, weil bei jeweils der Hälfte aller Deckenhalter, je nach Wirkrichtung der Kraft, die zugehörigen Ausleger an die Decke angepresst werden, womit jene Deckenhalter geschützt sind, bei denen bei dieser Kraftwirkungsrichtung der Ausleger von der Decke abgehoben würde.

Wenn verhindert werden soll, dass der Monteur bei der Anbringung der Deckenhalter die abwechselnd umgekehrte Montagerichtung beachten muß, sind zweckmäßigerweise an den Deckenhaltern zweite Kippsicherungsmittel vorhanden, die ein Verschwenken der Deckenhalter in einer Richtung verhindern, die der Sicherungsrichtung der ersten Kippsicherungsmittel entgegengesetzt ist.

Diese zweiten Kippsicherungsmittel können mit den Rinnen an den Seitenwänden der Kabelrinnen oder Kabelpritschen zusammenwirken oder aber auch mit dem Boden dieser Kabelrinnen oder -pritschen.

Kippsicherungsmittel, die diese Funktion erfüllen, können an den freien, nach oben ragenden Enden der Trägerelemente vorgesehen sein oder im Bereich der Abstandselemente. Dabei hat die Anbringung der Kippsicherungsmittel an den freien Enden der Trägerelemente den Vorteil, die Kontaktfläche zwischen dem Deckenhalter und der Kabelrinne zu vergrößern, wodurch die Lastkräfte mit einer geringeren Verformungsgefahr für die Kabelrinne in den Deckenhalter eingeleitet werden können.

Besonders einfache Kippsicherungsmittel bestehen in Armen, die sich in Richtung parallel zu der Längserstreckung der Kabelrinnen oder Kabelpritschen erstrecken.

Ein sehr einfach herzustellender Deckenhalter besteht aus einem durchgehenden Runddraht, der zur Ausbildung der entsprechenden Elemente abgewinkelt ist.

Im übrigen sind Weiterbildungen der Erfindung Gegenstand von Unteransprüchen.

In der Zeichnung sind Ausführungsbeispiele des Gegenstandes der Erfindung dargestellt. Es zeigen:
Fig. 1 ein erstes Ausführungsbeispiel des erfindungsgemäßen Deckenhalters, in einer perspektivischen Darstellung, zusammen mit einem Abschnitt einer Kabelrinne und
Fig. 2 ein zweites Ausführungsbeispiel des erfindungsgemäßen Deckenhalters, in einer perspektivischen Darstellung.

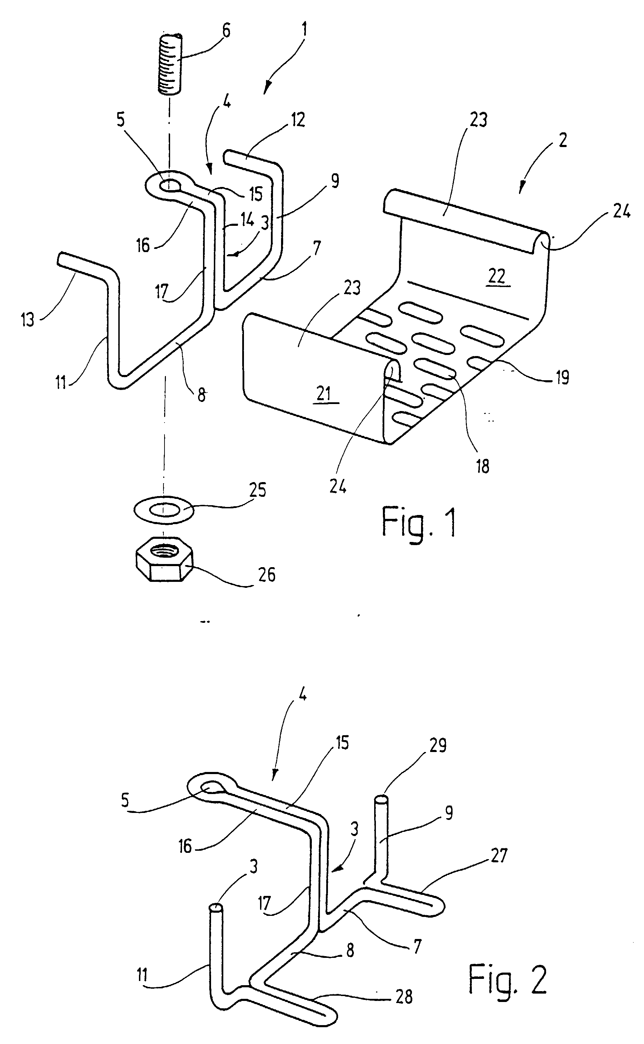

In Fig. 1 ist ein Deckenhalter 1 in seiner Gebrauchsstellung veranschaulicht. Der Deckenhalter 1 dient dazu, eine Kabelrinne 2, von der lediglich ein Längsabschnitt dargestellt ist, an einer nicht weiter gezeigten Decke zu befestigen. Der Deckenhalter 1 weist einen Stiel 3 auf, an dessen oberem Ende ein Ausleger 4 einstückig angeformt ist, der rechtwinklig zu dem Stiel 3 verläuft. An seinem von dem Stiel 3 abliegenden Ende ist der Ausleger 4 mit einer Öse oder Schlaufe 5 versehen, die auf einen abschnittsweise gezeigten an der Decke verankerten Gewindebolzen 6 aufzustecken ist.

Das untere Ende des Stiels 3 geht in zwei Abstandselemente 6, 7 über, die auf einer gemeinsamen Geraden liegen und sich rechtwinklig zu dem Ausleger 4 erstrecken.

An ihren freien Enden gehen die Abstandselemente 6, 7 in zwei nach oben aufragende Trägerelemente 9 und 11 über, die parallel und im Abstand zu dem Stiel 3 verlaufen. Der Abstand zwischen dem Stiel 3 und dem Trägerelemente 9 ist genauso groß wie der seitliche Abstand zwischen dem Stiel 3 und dem Trägerelement 11.

Die beiden Trägerelemente 9 und 11, die, wie sich aus der nachfolgenden Gebrauchsbeschreibung ergibt, kürzer als der Stiel 3 sind, gehen an ihren oberen freien Enden jeweils in Arme 12 und 13 über, die parallel zu dem Ausleger 4 verlaufen.

Die beiden Arme 12 und 13 sowie der Stiel 3 bilden Sicherungsmittel im Zusammenwirken mit der Kabelrinne 2 bzw. der Decke.

Der gesamte Deckenhalter 1 ist einstückig und besteht aus einem durchgehenden, entsprechend gebogenen Runddraht, was dazu führt, dass im Bereich des Stiels 3 und des Auslegers 4 entsprechende Drahtabschnitte aneinander anliegend parallel zueinander verlaufen. Der Runddraht ist derart gebogen, dass er, ausgehend von dem Arm 12, rechtwinklig nach unten abgebogen ist, wo er mit einem geraden Abschnitt das Trägerelement 9 bildet. Das untere Ende des das Trägerelement 9 bildenden Abschnittes ist rechtwinklig abgebogen, so dass das Abstandselement 7 entsteht, das rechtwinklig zu dem Arm 12 verläuft. Am von dem Trägerelement 9 abliegenden Ende ist der das Abstandselement 7 bildende Abschnitt des Drahtes rechtwinklig nach oben abgebogen, um dort einen Schenkel 14 des Stiels 3 zu bilden. Am oberen Ende des Stiels 3 ist der Draht rechtwinklig in dieselbe Richtung abgebogen, in der auch der Arm 12 zeigt, damit ein Schenkel 15 des Auslegers 4 entsteht. Am von dem Stiel 3 abliegenden Ende des Schenkels 15 ist der Runddraht zu der Öse 5 gebogen und geht im Anschluss an die Öse 5 in einen Schenkel 16 über, der ebenfalls Bestandteil des Auslegers 4 ist.

Nach dem Schenkel 16 ist der Runddraht nach unten zu in Richtung auf das Abstandselement 8 abgebogen, so dass ein Schenkel 17 entsteht, der parallel zu dem Schenkel 14 verläuft und an diesem anliegt.

Das untere Ende des den Schenkel 17 bildenden Drahtabschnitts ist in der entgegengesetzten Richtung abgebogen wie der Schenkel 14, damit das zu dem Abstandselement 7 koaxiale Abstandselement 8 entsteht. Schließlich ist der Runddraht am nach außen zeigenden Ende des das Abstandselement 8 bildenden Abschnittes nach oben zu abgewinkelt, um das Trägerelement 11 zu formen, das schließlich in den Arm 13 übergeht.

Die beiden Arme 12 und 13, die beiden Trägerelemente 9 und 11, die beiden Abstandselemente 7 und 8 sowie die beiden Schenkel 14 und 15 und die beiden Schenkel 16 und 17 sind jeweils gerade Drahtabschnitte und gehend mit entsprechenden Bogenstücken ineinander über, wie dies die Figur erkennen läßt.

Die Abmessungen des Deckenhalters 1 sind auf die mit seiner Hilfe an der Decke zu befestigende Kabelrinne 2 abgestimmt. Die Kabelrinne 2 besteht in bekannter Weise aus einem mit Langlöchern 18 gelochten und im übrigen planen Boden 19, der an seinen beiden in Längsrichtung der Kabelrinne 2 verlaufenden Rändern nach oben zu abgebogen ist, wodurch zwei parallel mit Abstand zueinander verlaufende Seitenwände 21 und 22 entstehen. Die beiden Seitenwände 21 und 22 sind im wesentlichen eben und mit dem Boden 19 einstückig verbunden.

An ihrem oberen Rand, der von dem Boden 19 abliegt, sind die beiden Seitenwände 21 und 22 jeweils mit einem Umbug 23 versehen, wodurch bei jeder Seitenwand 21, 22 eine nach unten zu offene Rinne 24 entsteht.

Die Handhabung des Deckenhaltes 1 ist wie folgt, wobei sich aus der Erläuterung der Handhabung auch die Dimensionierung des Deckenhalters 1 in Relation zu der betreffenden Kabelrinne 2 ergibt:

Der Deckenhalter 1 wird in der Weise in die Kabelrinne 2 eingesetzt, dass er unter leichtem Aufweiten, ohne jedoch die Grenze der elastischen Verformung zu überschreiten, von oben her in die Kabelrinne 2 eingesteckt wird. Dabei gleitet er mit seinen Trägerelementen 9 und 11 an der Innenseite des jeweils benachbarten Umbugs oder Bördelrands 23 vorbei. Die Einführbewegung wird solange fortgesetzt, bis der Deckenhalter 1 mit seinen beiden Abstandselementen 7 und 8 auf dem Boden 19 aufsteht. Sodann wird der Deckenhalter 1 um die beiden Abstandselemente 7, 8 als Drehachse in der Weise verschwenkt, dass die Arme 12 und 13 ein Stück weit in Richtung auf den Boden 19 zu bewegt werden, solange, bis der bogenförmige Übergang zwischen dem Trägerelement 9 und dem Arm 12 unter die Unterkante des betreffenden Umbugs 23 gelangt ist, ebenso wie der bogenförmige Übergang zwischen dem Arm 13 und dem Trägerelement 11.

Da die Kabelrinne 2 lediglich im Bereich der elastischen Verformung an ihrer oberen Öffnung aufgeweitet war, schnappt sie, sobald die genannten bogenförmigen Übergangsstücke den betreffenden Umbug 23 passiert haben, wieder in die Ausgangsstellung. In dieser Ausgangsstellung liegt jetzt die Seitenwand 21 an dem Trägerelement 11 und die Seitenwand 22 an dem Trägerelement 8 glatt und weitgehend ohne Spiel an. Die beiden Arme 12 und 13 dagegen fluchten mit der zugehörigen, jeweils über ihnen befindlichen Rinne 24. Der Deckenhalter 1 wird nun in die aufgerichtete Stellung überführt, in der seine beiden Trägerelemente 9 und 11 senkrecht zu einer durch den Boden 19 definierten Ebene verlaufen. In dieser aufgerichteten Stellung liegen die beiden Arme 12, 13 satt und über ihre gesamte Länge an dem nach oben weisenden Boden der Rinne 24 an. Damit ist ein Weiterkippen des Deckenhalters 1 in der Kabelrinne 2 um eine durch die beiden Abstandselemente 7 und 8 definierte Achse über diese erreichte Endstellung hinaus nicht möglich. Bezogen auf die Darstellung in der Figur bedeutet dies, dass ein Weiterdrehen des Deckenhalters im Uhrzeigersinne durch die Arme 12 und 13 im Zusammenwirken mit den Rinnen 24 blockiert wird, weil sich gleichzeitig die beiden Abstandselemente 7, 8 auf dem Boden 19 abstützen. Ein Zurückdrehen in die Ausgangsstellung, wie sie eingangs erwähnt ist, ist hingegen jederzeit möglich.

Nachdem der Deckenhalter 1 in dieser Weise eingesetzt und aufgerichtet ist, kann er mit der an dem Ausleger 4 vorhandenen Öse 5 auf den in die Decke eingeschraubten Schraubenbolzen 6 aufgesteckt werden und mit Hilfe einer zwischengelegten Beilagscheibe 25 und einer Gewindemutter 27 gegen die Decke festgeschraubt werden. Dabei liegt gleichzeitig der Ausleger 4 an der Decke flach an.

Sobald mit einem Deckenhalter 1 in der beschriebenen Weise verfahren ist, werden auch die übrigen Deckenhalter nacheinander in die Kabelrinne 2 eingesetzt und an der Decke verschraubt. Eventuell ist es zweckmäßig, zunächst sämtliche Deckenhalter 1 einzusetzen und sodann die Kabelrinne 2 als ganzes an der Decke zu befestigen.

Wenn nach der Montage der Kabelrinne 2 beim Installieren der Kabel Kräfte auftreten, die in Richtung parallel zur Längserstreckung der Kabelrinne 2 wirken, können dennoch an dem Schraubenbolzen 6 keine wesentlichen Knickkräfte verursacht werden.

Angenommen, durch das Einziehen der Kabel entsteht eine Längskraft in der Kabelrinne 2, die, bezogen auf Fig. 1 von links nach rechts gerichtet und bestrebt ist, den Deckenhalter 1 bezüglich der Öse 5 im Gegenuhrzeigersinne zu drehen. Eine solche Kraft führt dann dazu, dass sich lediglich der Ausleger 4 stärker an der Decke anlegt, was lediglich zu einer Erhöhung der Zugkraft in dem Schraubenbolzen 6, jedoch nicht zu einer Knickkraft führt.

Wenn die Kraft umgekehrt gerichtet ist, also bezogen auf Fig. 1 von rechts nach links, dann verriegeln die in den Rinnen 24 sitzenden Arme 12 und 13 weitgehend ein Drehen des Deckenhalters 1, um eine Achse quer zu der Längserstreckung der Kabelrinne 2, weil sie durch diese Kraft lediglich fester in die Rinnen 24 eingedrückt werden. Somit wird auf den Stiel 3 nur eine Querkraft und kein Drehmoment ausgeübt, weshalb auch der Ausleger 4 weitgehend drehmomentfrei bleibt. Er überträgt lediglich eine Druckkraft auf den Schraubenbolzen 6, der aber dadurch nicht auf Biegung, sondern nur auf Scherung beansprucht wird.

Damit das Eingreifen der Arme 12 und 13 in die von dem Umbug 23 gebildete Rinne 24 erfolgen kann, ist der Drahtdurchmesser des Deckenhalters 1 etwas kleiner als die lichte Weite der Rinne 24.

Fig. 2 zeigt ein anderes Ausführungsbeispiel des erfindungsgemäßen Deckenhalters 1. Auch dieser Deckenhalter 1 besteht aus einem Stiel 3, dessen oberes Ende in den Ausleger 4 übergeht. Der Ausleger 4 ist endseitig durch entsprechendes Biegen des den Deckenhalter 1 erzeugenden Drahtes zu der Öse 5 umgeformt.

Der wesentliche Unterschied zu dem Deckenhalter nach Fig. 1 besteht darin, dass bei dem Deckenhalter nach Fig. 2 die beiden oberen Arme 12 und 13 fehlen und die von ihnen erbrachte Kippsicherung mit Hilfe zweier Arme 27 und 28 erbracht wird, die an den Abstandselementen 7 und 8 ausgebildet sind. Die Arme 27 und 28 sind in Längsrichtung der zu halternden Kabelrinne 2 ragende schlaufenförmige oder gefaltete Ausstülpungen der Abstandselemente 7 und 8. Sie erstrecken sich parallel zu der Richtung des Auslegers 4 und liegen in der Gebrauchsstellung auf der Oberseite des Bodens 19 auf.

Die Trägerelemente 9 und 11 hingegen enden bei 29 und 31 stumpf.

Auch der Deckenhalter 1 nach Fig. 2 besteht aus einem Runddraht und ist einstückig. Seine Handhabung ist entsprechend der Handhabung des Deckenhalters 1 aus Fig. 1 und der einzige funktionsmäßige Unterschied besteht darin, dass die Schwenkbewegung im Uhrzeigersinne, bezogen auf Fig. 2, durch die Arme 27 und 28 begrenzt wird, wenn diese flach über ihre gesamte Länge auf dem Boden 19 aufliegen. In dieser Stellung sitzen die Trägerelemente 9 und 11 mit einer gewissen Vorspannung unterhalb und in der betreffenden Rinne 24 des jeweiligen Umbugs 23.

Es versteht sich, dass anstelle der gezeigten, aus Draht gebogenen bestehenden Deckenhalter 1 auch Deckenhalter verwendet werden können, die aus gestanzten und gebogenen Blechteilen hergestellt sind, soweit nach der Stanzung und dem Biegen die betreffenden Elemente entstehen, die in die Rinne 24 eingreifen und durch Verspannen zwischen der Rinne 24 und dem Boden 19 ein Überdrehen des Deckenhalters 1 in der Kabelrinne 2 blockieren.

Mit Hilfe des neuen Deckenhalters 1 können auch Kabelpritschen an der Decke befestigt werden. Diese Kabelpritschen brauchen lediglich in ihren seitlichen Holmen Rinnen aufzuweisen, wie sie im Zusammenhang mit der Kabelrinne in Fig. 1 gezeigt sind. Der Deckenhalter 1 wird bei einer Kabelpritsche im Bereich einer entsprechenden Sprosse eingesetzt. Der neue Deckenhalter 1 benötigt keinen durchgehenden Boden für das die Kabel aufnehmende trogförmige Element.

Ein Deckenhalter für Kabelrinnen oder Kabelpritschen wird schraubenlos und formschlüssig in der Kabelrinne oder Kabelpritsche gehalten, wobei zwei unterschiedliche Kippsicherungsmittel ein Verkippen des Deckenhalters in der Kabelrinne verhindern. Das eine der beiden Kippsicherungsmittel ist vor der Montage an der Decke, also lediglich nach dem Einsetzen in die Kabelrinne oder -pritsche wirksam, während das andere Kippsicherungsmittel wirksam wird, sobald der Deckenhalter an der Decke festgeschraubt ist. Danach ist ein Verschwenken des Deckenhalters in der Kabelrinne oder -pritsche in beiden Drehrichtungen bezüglich einer Achse, die quer zu der Längserstreckung der Kabelrinne oder -pritsche verläuft, unmöglich.

## Patentansprüche

1. Deckenhalter (1) für Kabelrinnen oder -pritschen (2), die zwei parallele mit Abstand voneinander verlaufende Seitenwände (21,22) aufweisen, die an ihrem oberen Rand nach innen zu unter Ausbildung einer Rinne (24) umgebogen sind, um die Kabelrinne oder -pritsche (2) an einer Decke o.ä. zu befestigen,
mit einem in Gebrauchsstellung vertikal verlaufenden Stiel (3), der an seinem oberen Ende eine Öse (5) zur Aufnahme einer Befestigungsschraube (6) aufweist,
mit zwei an dem unteren Ende des Stiels (3) abgehenden und sich in Richtung auf die Seitenwände (21,22) der Kabelrinne oder -pritsche (2) erstreckenden Abstandselementen (7, 8), die im wesentlichen längs einer gemeinsamen Geraden verlaufen und deren Länge zusammengenommen etwa der lichten Breite der Kabelrinne oder -pritsche (2) entspricht, und
mit Trägerelementen (9,11), die von den von dem Stiel (3) abliegenden Enden der Abstandselemente (7,8) im wesentlichen parallel nach oben aufragen und dazu eingerichtet sind, in die jeweilige nach unten zu offenen Rinne (24) der betreffenden Seitenwand (21,22) einzugreifen und die Kabelrinne oder -pritsche (2) zu tragen, wobei die Länge der Trägerelemente (9,11) derart bemessen ist, dass diese in die Rinne (24) der Kabelpritsche oder -rinne (2) eingreifen, wenn die Abstandselemente (7,8) auf dem Boden (19) der Kabelrinne oder -pritsche (2) aufliegen.

2. Deckenhalter nach Anspruch 1, wobei er insgesamt einstückig ist.

3. Deckenhalter nach Anspruch 1, wobei er mit ersten Kippsicherungsmitteln (4) versehen ist, die ein Verschwenken des in eine Kabelrinne oder -pritsche (2) eingesetzten Deckenhalters (1) zumindest in einer Drehrichtung bezüglich einer Achse verhindern, die durch die Abstandselemente (7,8) festgelegt ist.

4. Deckenhalter nach Anspruch 3, wobei die ersten Kippsicherungsmittel von einem Ausleger (4) gebildet sind, der an dem in Gebrauchsstellung obere Ende des Stiels (3) vorgesehen ist und mit der Decke zusammenwirk, an dem er im Gebrauch befestigt ist.

5. Deckenhalter nach Anspruch 4, wobei die Öse (5) für die Befestigungsschraube (6) an dem Ausleger (4) angeordnet ist.

6. Deckenhalter nach Anspruch 1, wobei er mit zweiten Kippsicherungsmitteln (12, 13,27, 28) versehen ist, die ein Verschwenken des in eine Kabelrinne oder - pritsche (2) eingesetzten Deckenhalters (1) in zumindest einer Drehrichtung bezüglich einer Achse verhindern, die durch die Abstandselemente (7,8) festgelegt ist.

7. Deckenhalter nach Anspruch 6, wobei die zweiten Kippsicherungsmittel (12,13,27,28) derart gestaltet sind, dass sie ein Verschwenken in einer Drehrichtung verhindern, die der Drehrichtung entgegengesetzt ist, in die die ersten Kippsicherungsmittel (4) ein Verschwenken verhindern.

8. Deckenhalter nach Anspruch 6, wobei die zweiten Kippsicherungsmittel (12,13) mit den Rinnen (24) an den Seitenwänden (21,22) der Kabelrinnen oder -pritschen (2) zusammenwirken.

9. Deckenhalter nach Anspruch 6, wobei die zweiten Kippsicherungsmittel (27,28) mit einem Bodenabschnitt (19) der Kabelrinnen oder -pritschen (2) zusammenwirken.

10. Deckenhalter nach Anspruch 6, wobei die zweiten Kippsicherungsmittel (12,13) an den freien nach oben ragenden Enden der Trägerelemente (9,11) vorgesehen sind.

11. Deckenhalter nach Anspruch 6, wobei die zweiten Kippsicherungsmittel (27,28) an den Abstandselementen (7,8) vorgesehen sind.

12. Deckenhalter nach Anspruch 6, wobei die zweiten Kippsicherungsmittel Arme (12,13) sind, die sich in Richtung parallel zu der Längserstreckung der Kabelrinne oder -pritsche (2) erstrecken.

13. Deckenhalter nach Anspruch 1, wobei er vollständig aus einem durchgehenden Runddraht hergestellt ist.

14. Deckenhalter nach Anspruch 1, wobei die Abstandselemente (7,8) gleiche Länge aufweisen.

## Claims

1. Ceiling support (1) for cable ducts or trays (2) comprising two parallel side walls (21, 22) which extend at a spacing from one another and are bent inwards at their upper edge to form a duct (24) in order to fasten the cable duct or tray (2) to a ceiling or similar,
with a stem (3) which extends vertically in the position of use and comprises at its upper end an eye (5) for accommodating a fastening screw (6),
with two spacer elements (7, 8) which start at the lower end of the stem (3), extend in the direction towards the side walls (21, 22) of the cable duct or tray (2) and essentially along a common straight line and the overall length of which corresponds approximately to the inside width of the cable duct or tray (2), and
with bearer elements (9, 11) which rise substantially parallel upwards from the ends of the spacer elements (7, 8) distant from the stem (3) and are adapted to engage in the respective duct (24), which is open downwards, of the relevant side wall (21, 22) and bear the cable duct or tray (2), wherein the length of the bearer elements (9, 11) is calculated such that these engage in the duct (24) of the cable tray or duct (2) when the spacer elements (7, 8) lie on the bottom (19) of the cable duct or tray (2).

2. Ceiling support according to claim 1, wherein it is in one piece overall.

3. Ceiling support according to claim 1, wherein it is provided with first anti-tilt means (4) which prevent the ceiling support (1), which is inserted in a cable duct or tray (2), from pivoting, at least in one direction of rotation relative to an axis, which is determined by the spacer elements (7, 8).

4. Ceiling support according to claim 3, wherein the first anti-tilt means are formed by a cantilever (4), which is provided at the end of the stem (3) at the top in the position of use and which co-operates with the ceiling to which it is fastened when in use.

5. Ceiling support according to claim 4, wherein the eye (5) for the fastening screw (6) is disposed at the cantilever (4).

6. Ceiling support according to claim 1, wherein it is provided with second anti-tilt means (12, 13, 27, 28) which prevent the ceiling support (1), which is inserted in a cable duct or tray (2), from pivoting, at least in one direction of rotation relative to an axis, which is determined by the spacer elements (7, 8).

7. Ceiling support according to claim 6, wherein the second anti-tilt means (12, 13, 27, 28) are formed such they prevent pivoting in a direction of rotation which is opposite to the direction of rotation in which the first anti-tilt means (4) prevent pivoting.

8. Ceiling support according to claim 6, wherein the second anti-tilt means (12, 13) cooperate with the ducts (24) at the side walls (21, 22) of the cable ducts or trays (2).

9. Ceiling support according to claim 6, wherein the second anti-tilt means (27, 28) cooperate with a bottom section (19) of the cable ducts or trays (2).

10. Ceiling support according to claim 6, wherein the second anti-tilt means (12, 13) are provided at the free upward projecting ends of the bearer elements (9, 11).

11. Ceiling support according to claim 6, wherein.the second anti-tilt means (27, 28) are provided at the spacer elements (7, 8).

12. Ceiling support according to claim 6, wherein the second anti-tilt means are arms (12, 13) which extend in a direction parallel to the longitudinal extent of the cable duct or tray (2).

13. Ceiling support according to claim 1, wherein it is made completely of a continuous round wire.

14. Ceiling support according to claim 1, wherein the spacer elements (7, 8) are of the same length.

## Revendications

1. Support à fixer au plafond (1) pour des goulottes ou des chemins de câbles (2) qui présentent deux parois latérales (21, 22) parallèles, espacées l'une de l'autre qui, au niveau de leur bord supérieur sont repliées en direction de l'intérieur et forment un ourlet (24) pour la fixation de la goulotte ou du chemin de câbles (2) à un plafond ou similaire,
comprenant un mât (3) vertical dans la position d'utilisation qui, à son extrémité supérieure, est muni d'un oeillet (5) destiné à recevoir une vis de fixation (6),
deux éléments d'espacement (7, 8) qui sont disposés à l'extrémité inférieure du mât (3), s'étendent en direction des parois latérales (21, 22) de la goulotte ou du chemin de câbles, s'étendent essentiellement le long d'une droite commune et dont la longueur cumulée correspond sensiblement à la largeur libre de la goulotte ou du chemin de câbles et
des éléments de support (9, 11) qui s'étendent essentiellement parallèlement vers le haut à partir des extrémités éloignées des éléments d'espacement (7, 8) et sont conçus pour s'engager dans l'ourlet (24) concerné, ouvert vers le bas, et supporter la goulotte ou le chemin de câbles (2), la longueur des éléments de support (9, 11) étant telle, que ceux-ci pénètrent dans l'ourlet (24) de la goulotte ou du chemin de câbles lorsque les éléments d'espacement (7, 8) sont en contact avec le fond (19) de la goulotte ou du chemin de câbles (2).

2. Support à fixer au plafond selon la revendication 1, celui-ci étant globalement réalisé d'une pièce.

3. Support à fixer au plafond selon la revendication 1, celui-ci étant muni de premiers moyens anti-basculement (4) qui empêchent un basculement du support (1) engagé dans la goulotte ou dans le chemin de câble (2), au moins dans une direction de rotation par rapport à un axe qui est défini par les éléments d'espacement (7, 8).

4. Support à fixer au plafond selon la revendication 3, dans lequel les premiers moyens anti-basculement sont formés par un bras (4) prévu à l'extrémité supérieure du mât (3) dans la position d'utilisation, qui coopère avec le plafond auquel le support est fixé.

5. Support à fixer au plafond selon la revendication 4, dans lequel l'oeillet (5) pour la vis de fixation (6) est aménagé sur le bras (4).

6. Support à fixer au plafond selon la revendication 1, celui-ci étant muni de seconds moyens anti-basculement (12,13,27,28) qui empêchent un basculement du support (1) engagé dans une goulotte ou dans un chemin de câbles (2) dans au moins une direction de rotation par rapport à un axe qui est défini par les éléments d'espacement (7, 8).

7. Support à fixer au plafond selon la revendication 6, dans lequel les seconds moyens anti-basculement (12, 13, 27, 28) sont agencés de telle sorte qu'ils empêchent un basculement dans une direction de rotation qui est opposée à la direction de rotation dans laquelle les premiers moyens anti-basculement (4) empêchent le basculement.

8. Support à fixer au plafond selon la revendication 6, dans lequel les seconds moyens anti-basculement (12, 13) coopèrent avec les ourlets (24) prévus sur les parois latérales (21, 22) des goulottes ou des chemins de câbles (2).

9. Support à fixer au plafond selon la revendication 6, dans lequel les seconds moyens anti-basculement (27, 28) coopèrent avec une partie de fond (19) des goulottes ou des chemins de câbles (2).

10. Support à fixer au plafond selon la revendication 6, dans lequel les seconds moyens anti-basculement (12, 13) sont prévus aux extrémités libres faisant saillie vers le haut des éléments de support (9, 11).

11. Support à fixer au plafond selon la revendication 6, dans lequel les seconds moyens anti-basculement (27, 28) sont prévus sur les éléments d'espacement (7, 8).

12. Support à fixer au plafond selon la revendication 6, dans lequel les seconds moyens anti-basculement sont des bras (12, 13) qui s'étendent dans une direction parallèle à l'axe longitudinal de la goulotte ou du chemin de câbles (2).

13. Support à fixer au plafond selon la revendication 1, celui-ci étant entièrement fabriqué à partir d'un fil rond continu.

14. Support à fixer au plafond selon la revendication 1, dans lequel les éléments d'espacement (7, 8) ont la même longueur.
